# EUROPEAN PATENT SPECIFICATION

(11) **EP 2 717 405 B1**
(45) Date of publication and mention of the grant of the patent: **19.08.2015**
(21) Application number: 13187314.3
(22) Date of filing: 04.10.2013
(51) Int. Cl.: H02J 1/02, H02J 9/00

(54) **System for reducing harmonic voltage components on a battery for uninterruptible power supplies (ups) and derived apparatuses**
System zur Reduzierung von Oberschwingungsspannungskomponenten auf einer Batterie zur unterbrechungsfreien Stromversorgung und abgeleitete Vorrichtungen
Système permettant de réduire les composantes de tension harmoniques sur une batterie pour systèmes d'alimentation sans coupure (ups) et appareils dérivés

(30) Priority: 04.10.2012 IT AR20120030
(43) Date of publication of application: 09.04.2014
(73) Proprietor: Borri S.p.A., 52011 Bibbiena (AR) (IT)
(72) Inventor: Simoni, Enrico, 52014 POPPI AR (IT); Mancini, Mario, 52014 POPPI AR (IT); Valiani, Massimo, 52045 Foiano della Chiana (Prov. of Arezzo) (IT)
(74) Representative: Modiano, Micaela Nadia

(56) References cited:
- DE-A1- 19 904 851

## Description

The present invention relates to a device and a control method for reducing the harmonic voltage components on batteries and/or capacitors, particularly for uninterruptible power supplies (UPS).

Batteries connected to the DC output bus of AC/DC rectification systems or of battery chargers, such as the batteries of uninterruptible power supplies or of DC power supply systems, are typically subjected to voltage and current ripples caused by several factors, such as the type of rectification and the type of load.

It is known that voltage ripples on the DC bus cause battery degradation. This occurs not only in UPSs is but also in generic DC rectification systems, as well as in photovoltaic inverters, in inverters for motors and in galvanic isolation systems.

The capacitors of such systems also are subjected to a similar ripple problem.

One particular drawback that can occur is when the string of batteries and/or capacitors on the DC bus is organized into bank sections, i.e., is composed of at least one pair of batteries (or capacitors) in series, connected in parallel to the DC bus, instead of a single battery (or of a single capacitor). The presence of a common node between this pair of batteries (or capacitors), to which other pairs of batteries (or capacitors) connected in the same manner may optionally be connected, can in fact cause excessive current ripples in the batteries (or in the capacitors), depending on the power required by the output load or on the power delivered by the AC/DC rectification system.

The aim of the present invention is to overcome the drawbacks described above, by providing a device and a method particularly for uninterruptible power supplies that reduces degradation phenomena on the battery string and/or on the capacitor banks.

Within this aim, an object of the invention is to reduce current ripples on bank sections of batteries and/or capacitors.

Another object of the invention is to provide a device and a method particularly for uninterruptible power supplies that is highly reliable, relatively easy to provide and at competitive costs.

This aim, as well as these and other objects that will become better apparent hereinafter, are achieved by a device, a method, a UPS, an inverter system and a rectification system according to the appended claims.

Further characteristics and advantages of the invention will become better apparent from the description of preferred but not exclusive embodiments of the device and of the method according to the invention, illustrated by way of nonlimiting example in the accompanying drawings, wherein:
Figure 1 is the diagram of a UPS of a known type with integrated battery charger, substantially corresponding to that described in DE19904851 A1 ;
Figure 2 is the diagram of a device for reducing harmonic voltage components according to the invention, applied to a DC bus which can belong to a UPS of a known type or to a DC power supply system of a known type;
Figure 3 is the diagram of a UPS with integrated battery charger, with the device for reducing harmonic voltage components of Figure 2 and with a device for connection/disconnection of the batteries with respect to the DC bus;
Figure 4 is the diagram of the connection/disconnection device used in Figure 3;
Figure 5 plots the average voltage ripple on the bus capacitors as a consequence of different driving strategies of the device for reducing harmonic voltage components;
Figure 6 is a diagram of the balancing system of the battery bank sections and of the bulk capacitor bank sections;
Figure 7 is a table of exemplifying operating constants of a control algorithm of the UPS of Figure 3;
Figure 8 shows the state machine of the control system of the UPS of Figure 3 and of the corresponding connection/disconnection device of Figure 4;
Figure 9 shows examples of electrical conditions that must occur within the UPS system of Figure 3 in order to declare as set a certain set of flags used in the state diagram of Figure 8 together with the exemplifying constants shown in Figure 7;
Figure 10 plots the total conversion electrical efficiency (understood as the filtered ratio between the electric power of the active type provided to the load and drawn from the primary electrical mains) in the double conversion On-Line mode as some operating parameters of the UPS vary;
Figure 11 exemplifies, in some points of operation, Figure 10 in order to illustrate the benefit in terms of electrical efficiency of the battery disconnection/collection system shown in Figure 4.

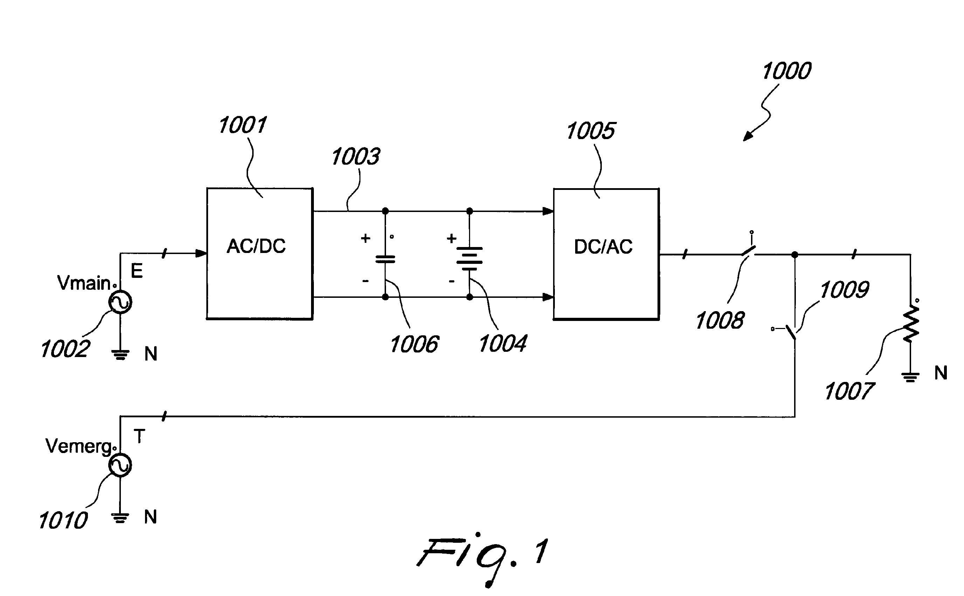

With reference to Figure 1, an uninterruptible power supply, hereinafter referenced also as UPS, is an electrical machine that has an alternating voltage input (three-phase or single phase) which produces an alternating output (three-phase or single phase) having the same or a different frequency/amplitude and adapted to ensure a continuous flow of power to an output load even if the input alternating voltage source is temporarily unavailable.

An integral part of the architecture is an internal/external storage system (usually strings of batteries of disparate construction technology), which ensures the continuity of the supply of power on the load for a preset time if the input mains is unavailable. An emergency system which bypasses the UPS completely (known in the literature as bypass switch) connects the load directly on an auxiliary input electrical mains in case of failure or end of runtime of said UPS.

Figure 1 shows a UPS 1000 which comprises an AC/DC rectification system 1001 connected in input to an AC source 1002, for example to the primary electrical mains, with a number of power conductors that can be comprised between two conductors (single-phase systems) and four conductors (three-phase systems with neutral). The AC/DC rectification system 1001 is connected in output to a DC bus 1003, on which a high-voltage battery string 1004 (the operating values of which are comprised usually between 500 and 900 V DC) and internal capacitors 1006 are arranged.

In the example of Figure 1, the AC/DC rectification system 1001 performs the dual function of battery charger and stabilizer of the voltage of the DC bus 1003 on the internal capacitors 1006.

The DC bus 1003 is connected to the input of a DC/AC inverter system 1005, which supplies the output load 1007 arranged by the user by drawing power from the battery 1004 and/or from the system of internal capacitors 1006, according to the operating logic of the UPS. Such DC/AC inverter system 1005 may be isolated from the load by means of a power switch 1008 known as solid-state switch.

In case of failure of one of the internal components of the UPS or of abandonment of the allowable range of the input mains voltage 1002, in order to ensure continuity of power on the load another power switch 1009, known as bypass switch, is closed in order to connect the load 1007 directly on an emergency electrical mains 1010 which, in some machine configurations, can coincide with the primary mains 1002.

The operating modes that are usually present in a UPS (implemented with more or less complex logic systems) are the following:
- On-Line mode: in this mode, the battery string does not supply power to the load but absorbs it, since it is placed in the recharge/float step. The load 1007 is carried by the AC/DC + DC/AC double conversion system, the bypass switch 1009 is open and the solid-state switch 1008 is closed;

- Off-Line mode: in this mode, the system is powered by the bypass mains 1010 directly and the battery string is placed in a recharge/float condition. When the bypass mains 1010 is unavailable or abandons operating tolerance conditions, the AC/DC + DC/AC double conversion system starts and powers the load 1007 while the bypass switch 1009 is opened;
- High-efficiency mode (Eco-Mode): this is a series of variations of the preceding modes, in which the element to be privileged is the efficiency of the transfer of power from the input mains 1002 toward the output load 1007.

From a standpoint of topological solutions, the strategies adopted to provide the power blocks are the most disparate. In particular, the following categories can be distinguished:
- electronic switches: the devices for power bypass on the load are provided by means of active power devices in order to minimize intervention delays in transition between the several states of the operating modes;
- mechanical switches: the devices for power bypass on the load are provided by means of passive devices of the electromechanical type to minimize electrical losses;
- one/two-way systems: the flow of power in the devices 1001, 1101, 1005 and 1105 can be one-way (from the input toward the output but not vice versa) or two-way (from the input toward the output and vice versa). The power flow in the devices 1107, 1008 and 1009 is instead two-way. The main advantages of a two-way arrangement include high dynamic reaction of the system and versatility; the main disadvantages include cost, lower reliability and a generalized reduction in conversion efficiency;
- single/multilevel systems: the topological structure of the devices 1001, 1101, 1005, 1105, 1107 can have systems with two voltage levels or complex systems with multiple voltage levels. The main advantages of the multilevel system include low harmonic content in output of the voltage and of the current in the inductors and an increase in conversion efficiency; the disadvantages include great circuit complexity, higher cost in terms of components and higher likelihood of failure.

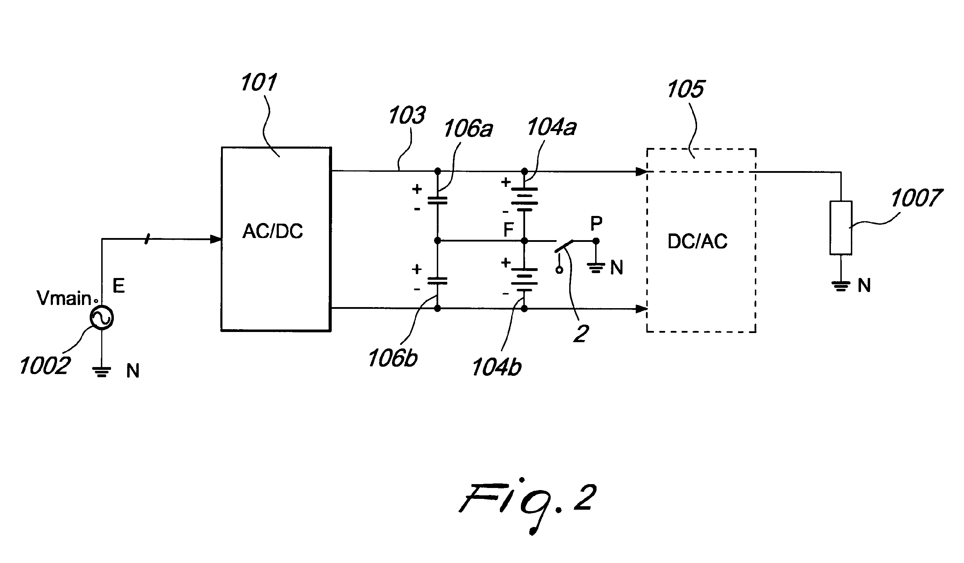

Figure 2 illustrates a general case of application of the device for reducing harmonic voltage components according to the invention, in which a pair of batteries 104a and 104b arranged in series so as to have a common node F is used on a DC bus 103.

The DC bus 103 can belong to a UPS such as the one of Figure 1 or be comprised between an AC/DC rectification system 101 for the voltage generated by an input electrical mains 1002 and a DC/AC inverter system 105, which is connected in output to the load 1007 by means of the solid-state switch 1008 (not shown), as in Figure 1.

As an alternative, the DC bus can be the bus of a more general rectification system, of the AC/DC or DC/DC type, or can belong to an inverter system, such as a photovoltaic inverter or an inverter for electric motors or for galvanic insulation systems.

Furthermore, the DC bus 103 has at least one pair of capacitors 106a and 106b, the common node of which is rendered equipotential with respect to the common node F of the batteries 104a and 104b, preferably by direct connection. There can be also systems, not shown in Figure 2, for connection/disconnection of the batteries 104a and 104b with respect to the DC bus 103 and likewise the bypass switch 1009 and the emergency mains 1010, also not shown in Figure 2.

As an alternative, the DC bus 103 shown in Figure 2 can be the bus of a DC power supply system or can be connected, without the interposition of a DC/AC inverter system, to the load 1007.

A device for reducing harmonic voltage components according to the invention comprises a switch 2 which is connected between the common node F of the batteries 104a/104b and a "cold" point of equipotential reference P to a voltage reference, for example to the neutral (N) of the input mains 1002 or to the ground reference of the system.

Depending on the requirements, there can be multiple pairs of batteries connected like the batteries 104a and 104b, or connected to each other in series so as to have a common node and in parallel to the DC bus 103. In this case, there can be multiple switches 2, each connected between a point of convenient equipotential reference to a voltage reference and a respective common node F of one or more pairs of batteries, so as to be able to control the several switches 2 independently of each other. As an alternative, there can be a single switch 2 that is common to all the pairs of batteries if there is a single intermediate node F in common among all the pairs of batteries of the DC bus 103.

The switch 2 is preferably of the two-way type and can be provided by means of a mutually opposite pair of thyristors or SCRs or can be a two-way passive electromechanical switch.

The function of the switch 2 is to isolate, as needed, the reference point P with respect to the bank sections 104a and 104b. This allows to vary the voltage ripple on the bank sections 104a and 104b, depending on the situation of use, for example the recharging or discharge step of the batteries 104a and 104b or on the basis of the power required by the load 1007.

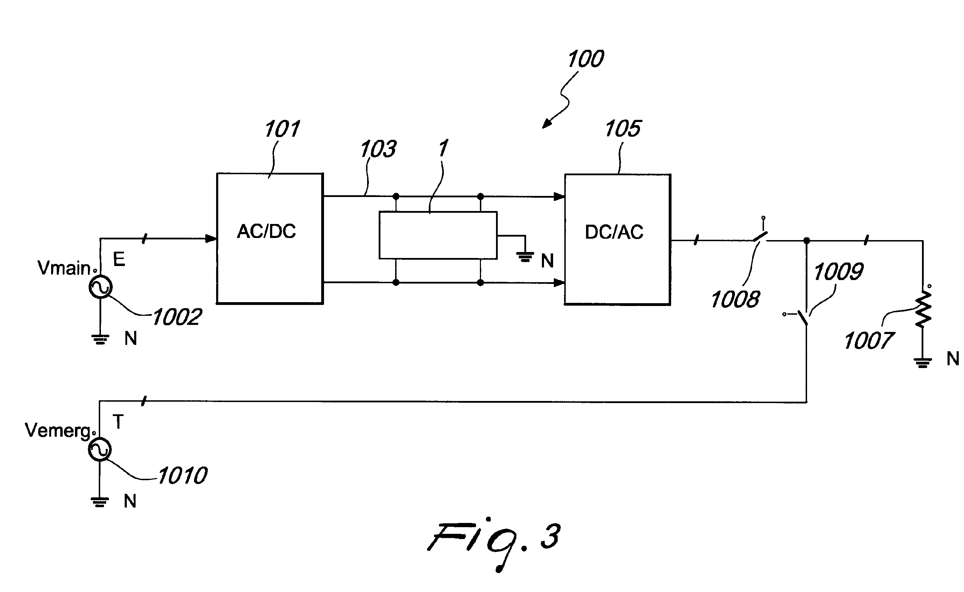

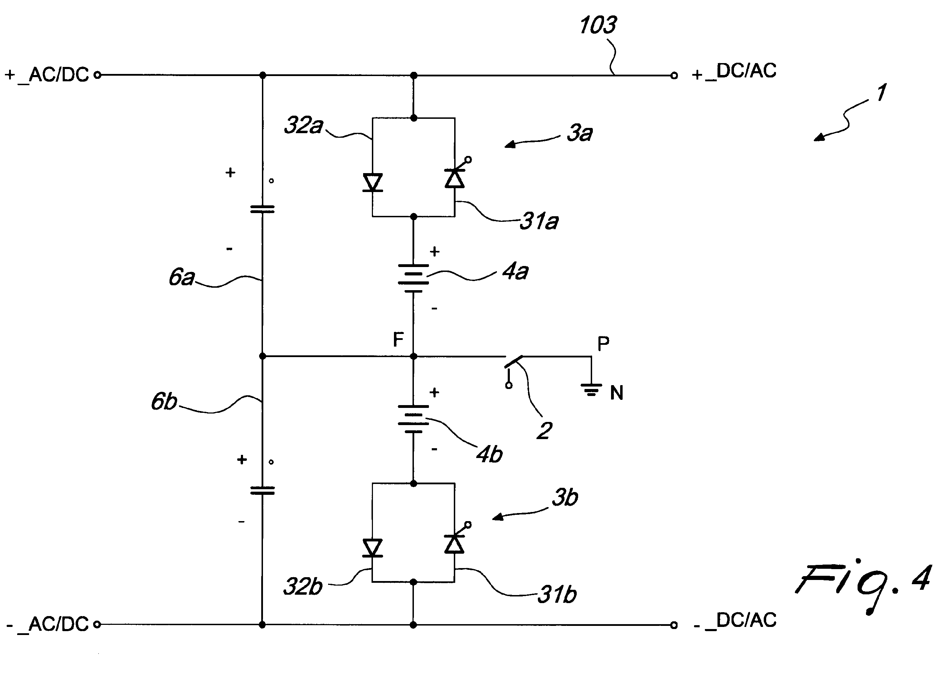

With reference to Figures 3 and 4, the device 2 for reducing harmonic voltage components is applied in a UPS 100, which comprises an AC/DC rectification system 101, which is connected in input to an AC source 1002, for example to the primary electrical mains, with a number of power conductors that can be comprised between two (single-phase system) and four (three-phase system with neutral) conductors.

The AC/DC rectification system 101 performs the function of a battery charger and of a stabilizer of the voltage of the DC bus 103 on the capacitors 6a and 6b.

The DC bus 103 is connected to the input of a DC/AC inverter system 105, which supplies the output load 1007 by drawing power from battery bank sections 4a and 4b. The DC/AC inverter system 105 can be isolated from the load by means of a solid-state switch 1008.

There is also a bypass switch 1009 in order to connect, in case of failure of one of the internal components of the UPS 100 or of abandonment of the allowable range of the voltage of the input mains 1002, the load 1007 directly on an emergency electrical mains 1010, which can optionally coincide with the primary mains 1002.

The batteries 4a and 4b have the same name plate data and preferably are of the high-voltage type (500-900 V DC). The series arrangement of the batteries 4a and 4b constitutes the battery of the UPS 100 and is connected in parallel to the DC bus 103. Each battery 4a and 4b can be constituted optionally by a group of batteries arranged in series or in parallel to each other. The embodiment described here considers the case in which the two battery bank sections are each composed of a single battery 4a and 4b.

As in the example of Figure 2, both batteries 4a and 4b have a common node F and are connected, by means of the switch 2, to a reference point P that is equipotential with respect to a voltage reference, for example to the neutral (N) of the input mains 1002 or to the ground reference of the system.

The DC bus 103 is buffered by an adapted bank of capacitors having the same name plate data 6a, 6b, each arranged in parallel to the series arrangement between the respective battery 4a/4b and a respective connection/disconnection assembly 3a/3b, described hereinafter. The capacitors 6a, 6b can be optionally separate with respect to the device 1 and provided on the DC bus 103 in output to the rectification system 101, on condition that their mutual connection point F is connected to the mutual connection point of the batteries 4a and 4b, as shown in Figure 4.

Each battery 4a and 4b is connected to a respective branch of the bus 103 by means of the respective connection/disconnection assembly 3a, 3b, each comprising two one-way switches 31a, 32a, 31b, 32b, which are mutually connected in parallel and are arranged so as to conduct current in mutually opposite directions.

In particular, with reference to the first battery 4a, referenced here also as positive bank section, the first connection/disconnection assembly 3a comprises a first switch 31a of the active type or provided with a gate terminal for corresponding control and a second switch 32a, for example a one-way device that is not controlled. In particular, the first switch 31a can be an electronic switch that can be voltage-controlled, for example a thyristor, while the second switch 32a can be a passive diode.

In the preferred embodiment of the invention shown in the figures, the first switch 31a is an SCR (Semiconductor-Controlled Rectifier) with the anode on the positive pole of the battery 4a, with the cathode on the positive pole of the DC bus 103 and with the gate connected to a control system that is adapted to operate the connection/disconnection device 1 and the UPS 100 with the process described hereinafter.

The diode 32a is connected in parallel to the SCR 31a but with the anode on the positive pole of the DC bus and the cathode on the positive pole of the battery 4a, so as to conduct current in the opposite direction with respect to the direction of the SCR 31a.

As regards the negative bank section, the second connection/disconnection assembly 3b is connected between the negative pole of the battery 4b and the negative pole of the DC bus 103 and is provided with switches 31b, 32b that are identical to those of the first connection/disconnection assembly 3a.

For example, as shown in the figures, there is an SCR 31b with the anode on the negative pole of the DC bus 103 and the cathode on the negative pole of the battery 4b and a passive diode 32b with the cathode on the negative pole of the DC bus 103 and the anode on the negative pole of the battery 4b.

The function of the first switch 31a, 31b is to connect/disconnect under power the bank sections of the battery dynamically during the discharge step. Since this is a one-way switch, it does not influence the charging step of the battery but only the discharge step. The fact that it can be voltage-controlled by means of an adapted external control system allows to implement procedures for dynamic connection and disconnection that are adapted to extend the life of the batteries 4a and 4b, to isolate them in case of failure and to increase the conversion efficiency of the system.

The function of the second switch or uncontrolled one-way device 32a, 32b is to connect statically the DC bus 103 to the bank section in order to allow its recharging step. Since this is a one-way device, it does not influence the discharge step but only the charging step. The presence of this component allows a battery charger, implemented by the AC/DC rectification system 101 or by a dedicated circuit, to vary the voltage of the DC bus 103 dynamically, with a benefit for battery management and electrical efficiency.

The function of the switch 2 is to isolate the reference point P with respect to the bank sections 4a and 4b. This allows to manage the voltage ripple on the bank sections 4a and 4b in a smart manner and to extend considerably the life of the batteries.

The theoretical and practical justification for the insertion of the two-way switch 2 is the variation of the voltage ripple across the individual bank sections 4a and 4b.

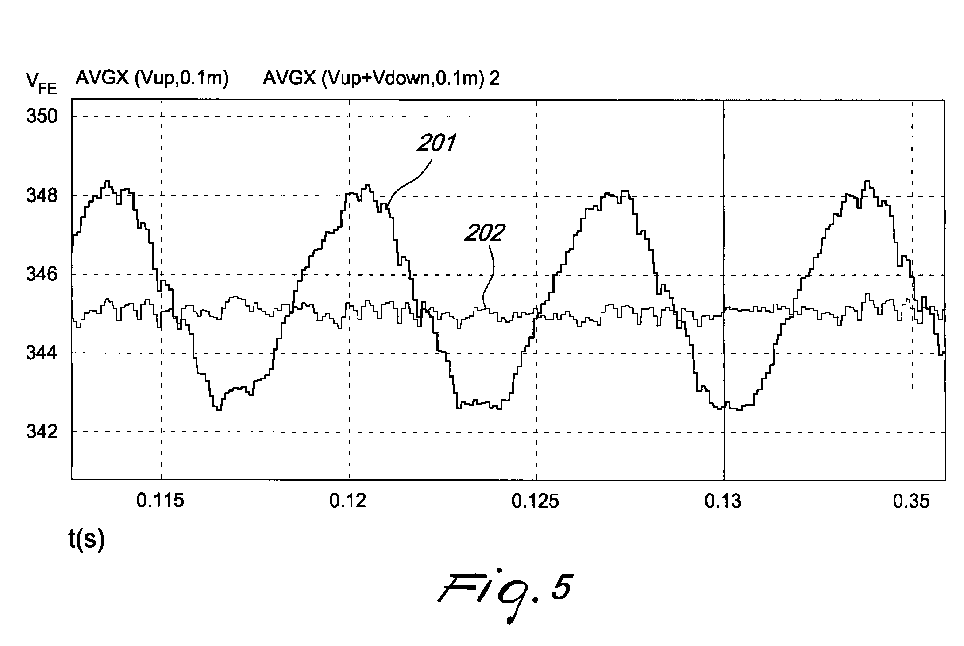

When the switch 2 is closed, each individual bank section is connected to the point P, which is the connection point with respect to which the battery charger (the AC/DC rectification system 101 or an external battery charger) performs the recharging process, and to the neutral of the load 1007 in output. The fact that it is connected entails the presence of a voltage ripple on the battery, which has a behavior 201 plotted in Figure 5.

When the switch 2 is open, the common point F of each bank section 4a, 4b, 6a, 6b is isolated from the neutral point P, but from a dynamic point of view its voltage still coincides on average with the voltage of the point P. This last property still allows the rules of control of input power adjustment performed by the battery charger to work. The demonstration of this property derives from basic theory of electrical systems: for example, if one considers a balanced three-phase input system, it is demonstrated that the voltage between the input source 1002 and the node F has a null average component and a component at a frequency that is three times that of the mains 1002 (third harmonic component) that does not intervene in the flow of active power. Conversely, the voltage ripple that each bank section 4a and 4b receives is considerably lower than if the point P is in short-circuit with the node F, for example with the behavior 202 shown in Figure 5. A smaller voltage ripple (and therefore current ripple) leads to a lower electrochemical stress of the elements of the battery 4a/4b and therefore to an extension of its life and to a reduction of the likelihood of failure.

The switch 2 can be driven according to several strategies, by means of an adapted driving system which can be provided easily by a person skilled in the art in order to implement one or more of these strategies.

According to a first strategy, the switch 2 can be driven by following the logic of the output load 1007 of the DC/AC inverter system 105.

In particular, if the power required by the load 1007 and delivered by the DC/AC inverter system 105 is lower than a certain threshold of the percentage load (for example 30% of nominal power), the switch 2 is kept closed. In this condition, the current ripple that occurs over the capacitors 6a and 6b and therefore over the batteries 4a and 4b is modest.

If instead the power required by the load 1007 and delivered by the DC/AC inverter system 105 is higher than a certain threshold of the percentage load (for example 30% of nominal power), the switch 2 is kept open. In this condition, the current ripple that occurs over the capacitors 6a and 6b and therefore over the batteries 4a and 4b would be high if the switch were closed, and therefore one benefits from the advantages explained earlier.

According to another strategy, the switch 2 can be driven by following the logic of battery recharging in the Off-Line mode, i.e., in the mode in which the load 1007 is maintained by the emergency mains 1010 and the DC/AC conversion system 105 is kept off or on with no load. The AC/DC rectification system 101 is instead kept on to recharge the battery string or keep it in a buffer condition.

In this second strategy for driving the switch 2, the logic that is followed is as follows.

If the power delivered by the AC/DC rectification system 101 is high because the battery is in the recharging step, the switch 2 is kept open. In this condition, the current ripple that occurs over the capacitors 6a and 6b and therefore over the batteries 4a and 4b would be high, because the recharging current is high. Keeping the switch 2 open, instead, mitigates the problem without compromising the recharging process.

If instead the power delivered by the AC/DC rectification system 101 is low because the battery is in the floating step, the switch 2 is kept closed. In this condition, the current ripple that occurs over the capacitors 6a and 6b and therefore over the batteries 4a and 4b is low because the recharging/floating current is low.

With reference to Figure 3, one possible problem due to the variable nature of the output load is the imbalance of the bank sections of batteries and capacitors. If for example the output load 1007 has asymmetric absorptions between the positive half-wave and the negative half-wave, or if the load is biased, the consequence is a different electric power that is requested to the upper and lower bank sections on the DC bus 103, leading to an imbalance of the respective voltages.

The imbalance is not in itself a phenomenon that compromises the operation of the UPS if it is kept within certain limits, but it can expose to asymmetric wear the components with the common node F that are connected on the DC bus 103 and can increase the risk of reaching the internal protection thresholds of which every UPS is provided, in particular the overvoltage thresholds.

This phenomenon is frequent where the common node F is isolated with respect to the reference point P, intentionally or not.

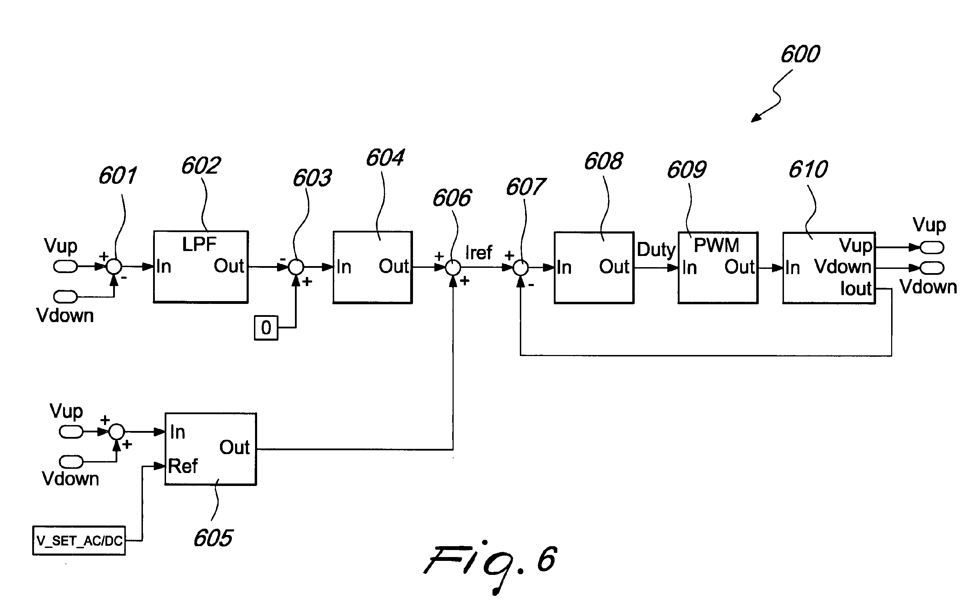

It is therefore advantageous to resort to a DC bus balancing system such as the one shown in Figure 6.

The bulk balancing that has been devised uses the properties of electrical connection shown in the UPSs of Figure 2 and Figure 3, with a load 1007 of the AC type. With reference to the upper bank section, the capacitor bank section 6a or 106a is always placed in an electrical parallel arrangement with the battery bank section 4a or 104a. Consequently, a balancing of the bulk capacitors 6a/106a will lead automatically to a balancing of the batteries 4a, 104a.

In order to obtain a balancing, it is possible to use a balancing system 600 that is configured as to perform a selective injection of direct current in the bank sections of the DC bus 103 on the part of the AC/DC rectification system 101, said current being such as to compensate the asymmetric absorption of the load 1007, i.e., the DC component in the absorption.

With reference to Figure 6, the balancing system 600 is connected to the DC bus 103 and to the common node F so as to draw the voltage value Vup on the positive bank section (4a or 104a) and the voltage value Vdown on the negative bank section (4b or 104b).

In a first node 601, the difference of these two voltage values is measured and is filtered with a low-pass filter 602 in order to eliminate the ripple components (for example 100/120 Hz for a single-phase system and 150/180 Hz for a three-phase system at 50/60 Hz) and any input/output beating. The cutoff frequency of the low-pass filter 602 can be typically 5 Hz.

More generally, given a mains frequency *f*, the ripple components can be 2*f* for single-phase systems and 3*f* or 6*f* for three-phase systems. In these cases, the low-pass filter 602 is selected with a cutoff frequency comprised preferably between 10% and 15% of *f*.

The balancing system 600 furthermore has a second node 603 in which the value of the imbalance (Vup-Vdown) that is low-pass filtered by the filter 602 has its sign changed and compared with the zero value, in order to provide the resulting non-null value, if any, to a balancing regulator 604.

The balancing regulators 604, which can be a proportional regulator but can be provided according to other methods, is adapted to produce in output the consequent DC value that would have to be injected into the DC bus in order to remove the measured imbalance.

At the node 606, the output of the regulator 604 is added to the current setpoint that originates from a loop that regulates the total voltage and generates an overall reference to be passed (after appropriate limiting) to the current loops that regulate the current absorbed by the input mains 1002.

For this purpose, the balancing system 600 can have a voltage loop which, by drawing the voltage readings from the positive bank section (Vup) and from the negative bank section (Vdown) and adding them, calculates the total voltage value on the DC bus and compares it to the current voltage setpoint set on the AC/DC rectification system 101 ("V_SET_AC/DC").

A bulk regulator 605 is adapted to provide, on the basis of this comparison, the setpoint of the AC current that must be imposed on the electrical mains 1002 by the AC/DC rectification system 101.

At the node 606, this current setpoint is added to the DC current value in output from the balancing regulator 604 and the result is supplied to a current loop, in which it is compared with the current reading performed on the electrical mains by the AC/DC rectification system 101.

The output of this current regulation is the duty cycle of the power semiconductors, which, by means of adapted power inductors, are interfaced with the primary electrical mains 1002. This duty cycle is then provided by means of a PWM modulator 609 to the power stage 610 that performs control of the AC/DC rectification system 101.

The current loop closes at the node 607, on which the reference current in output from the node 606 is subtracted from the reading of the current Iout performed by the AC/DC rectification system 101 on the electrical mains 1002. The error that results from the node 607 is then fed in input to a current regulator 608, which consequently provides said duty cycle to be applied to the PWM modulator 609.

The purpose of the balancing system 600 is to impose the difference between the upper and lower bank sections by means of a shift toward positive (or negative) values of the current reference so as to inject on said bank sections a direct current of such extent as to balance said two bank sections.

The usefulness in particular of the group constituted by the elements 601, 602, 603 and 604 is particularly advantageous during the opening of the switch 2 of the device according to the invention, since it allows to prevent any leakage of the voltage between the common note F and the neutral N of the mains or the ground reference, and to keep the battery strings 4a/4b or 104a/104b in a condition of symmetry both during charging and during discharge.

Going back to the embodiment of Figure 4, the first switches 31a, 31b of the connection/disconnection assemblies can be used in a particularly advantageous embodiment to perform the functions of management of the battery charging process, management of the transition of operating modes (On-Line, Off-Line, Eco-Mode) and disconnection of the battery in case of failure by resorting to a control system, which can be provided circuitally easily by a person skilled in the art and is **characterized in that** it implements a state machine and a method for performing the above cited functions.

These functions lead to a preservation of the life of the battery and to an increase in the overall electrical efficiency of the UPS, as will be described hereinafter.

The control system is adapted to control at least the first switches 31a, 31b of the connection/disconnection device 1 to connect or disconnect it with respect to the DC bus, to detect the voltage on the DC bus and to set setpoint voltages of the AC/DC rectification system. Furthermore, the control system is adapted to control the activation and deactivation of the AC/DC rectification system, of the DC/AC inverter system, and to switch on and off the solid-state switch 1008, the bypass switch 1009 and optionally the switch 2, if present.

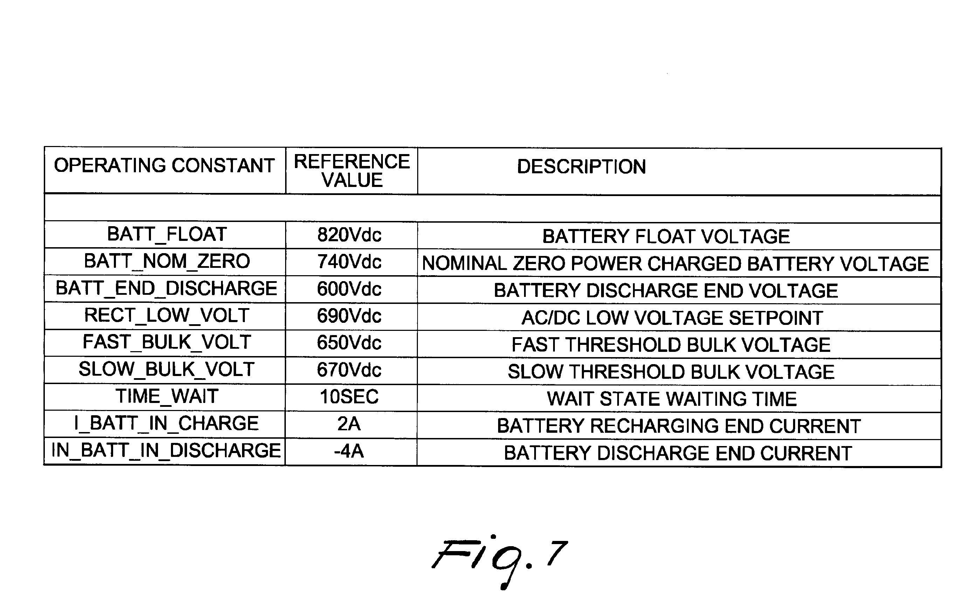

To understand the control diagram, consider the UPS of Figure 3, which shows some operating constants listed in the table of Figure 7, which will be used, without any restriction on generality, to illustrate the operating modes of the present invention.

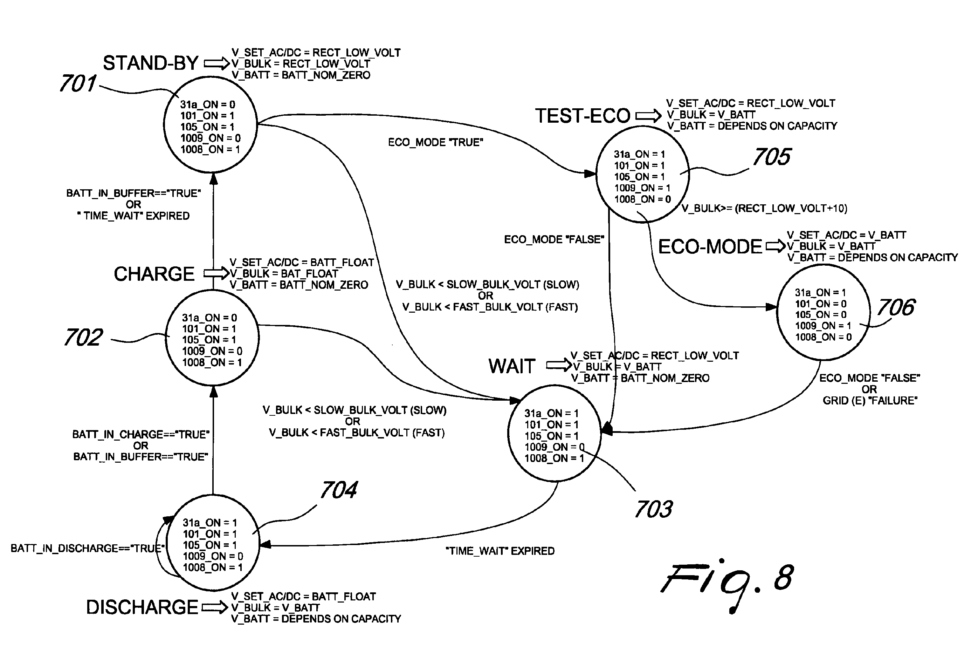

The management of the first and second switches 31a, 31b, 32a, 32b in combination with the elements 101, 105, 1008 and 1009 follows the state diagram given in Figure 8, which shows the operating modes.

For the sake of simplicity, the operation of the state machine is described only for the positive bank section of the battery 4a and for the positive bank section 6a of the DC bus 103: the conditions must be assumed to be replicated and valid also for the negative bank sections 4b and 6b.

Before proceeding, it is specified that the expression "galvanically disconnected" is understood to reference a component of the electric circuit the terminal input and/or output nodes of which are not physically connected to other terminals of other elements of the circuit to which it belongs, whereas "electrically disconnected" is understood to reference a component of the electric circuit the terminal nodes of which are both connected to other nodes of the circuit to which it belongs but is not affected by exchanges of electrical charges, i.e., of electric currents, with other components of the circuit.

With reference to Figure 8, considering the system initially in the "Standby" state 701, the first switch 31a is open ("31a_ON=0") and the rectification system 101 is started ("101_ON=1") and set to generate a voltage on the DC bus 103 ("bulk voltage" or V_BULK) equal to "RECT_LOW_VOLT", i.e., to a preset setpoint value of low voltage of the AC/DC, that is lower in value, preferably by 5% to 10%, than the nominal voltage ("BATT_NOM_ZERO") of the series arrangement of the batteries 4a+4b in the fully charged state and at zero power. The DC/AC inverter system 105 is started (105_ON=1) and supplies power to the load 1007, since the solid-state switch 1008 is closed ("1008_ON=1") and the bypass switch 1009 is open ("1009_ON=0").

Since the voltage "RECT_LOW_VOLT" is lower than the nominal voltage at zero power of the charged battery ("BATT_NOM_ZERO"), the diode 32a is off. Since the first switch 31a is kept open and arrives from the "Charge" state 702 described hereinafter, the first switch 31a is off: the result is that in this state the battery 4a is disconnected electrically from the DC bus 103 of the UPS 100, because it is not affected by the flow of current.

The load 1007 is supported by the AC/DC + DC/AC double conversion system 101 and 105, since the bypass switch 1009 also is in the open position and the solid-state switch 1008 is closed. This is the operating state in which the UPS 100 operates normally in the double conversion On-Line mode and passes most of the time in this state.

The fact that the battery 4a is disconnected electrically from the DC bus 103 has the advantage of preserving it and of extending its life with respect to systems which, despite not discharging/floating it, keep it still electrically connected to the DC bus.

The additional advantage of this management also resides in the improvement in the electrical efficiency of the machine, as will be described hereinafter.

Several migrations from this standby state 701 are possible. If a voltage drop of the DC bus 103 below a first voltage threshold "SLOW_BULK_VOLT" occurs within a preset long observation time (comprised by way of indication between 1 second and 10 seconds) or below a second voltage threshold "FAST_BULK_VOLT" within a preset short observation time (comprised by way of indication between 0.001 seconds and 0.5 seconds), one moves to the "Wait" state 703. The reduction of the bulk voltage can occur for several reasons, such as the lack of the input mains 1002 that supplies the AC/DC rectification system 101, the failure of one or more circuits of said system, the self-discharge of the battery 4a, or any other phenomenon that causes loss of charge in the capacitor 6a.

In the "Wait" state 703, the only variation with respect to the "Standby" state 701 is the closure of the first switch 31a of the device 1. Since the voltage setpoint of the AC/DC has not been altered, the first switch 31a starts to conduct and the battery 4a is thus connected electrically to the DC bus 103 in the discharge mode and brings the DC bus 103 to the "BATT_NOM_ZERO" voltage. In this step, the load 1007 is supplied both by the AC/DC + DC/AC double conversion system 101 and 105 and by the battery 4a.

After a preset time "TIME_WAIT" for waiting in the state 703, one passes to the "Discharge" state 704. In this state there are no changes to the operating state of the components 31a, 101, 105, 1008 and 1009 and the setpoint of the AC/DC rectification system 101 is brought to the floating voltage value of the battery 4a "BATT_FLOAT", which has a value that is higher, preferably by 5-10%, than the nominal voltage (BATT_NOM_ZERO) of the series arrangement of the batteries 4a+4b in the charged state and at zero power. The purpose of this action is to trigger the battery charging process (if possible) by raising the voltage across the batteries 4a and 4b: the determination of what occurs derives from the monitoring of the current that enters the battery 4a (concisely referenced herein as "I_BT") and of the voltage of the DC bus 103 (referenced here as "V_BT"), which in this step coincides with the voltage of the batteries 4a and 4b, since the first switches 31a and 31b are closed.

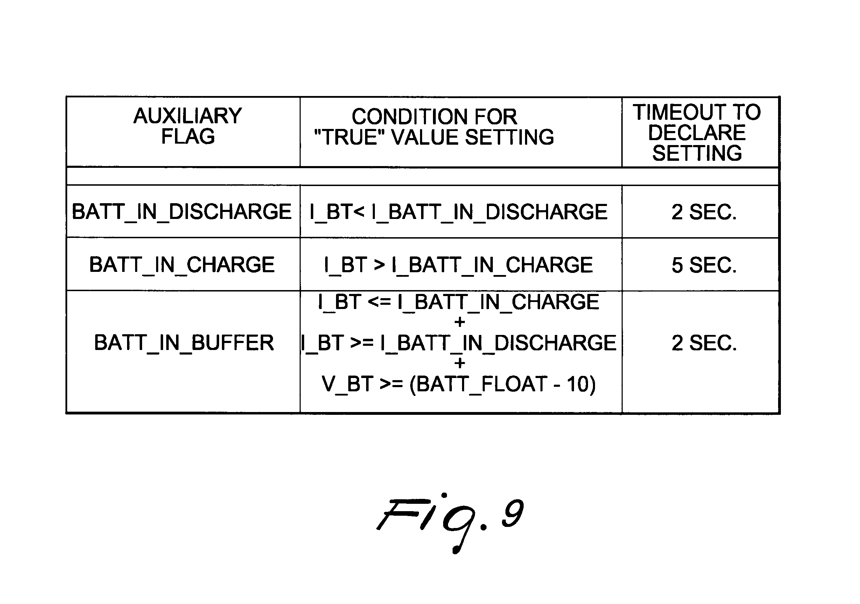

For current monitoring, it is useful to define flags of the Boolean type, i.e., which assume the value "TRUE" if the conditions are verified or "FALSE" if they are not verified, such as the ones indicated in Figure 9. In particular, one remains in the "Discharge" state 704 until the flags "BATT_IN_CHARGE" or "BATT IN BUFFER" assume the value "TRUE".

In particular, the " BATT_IN_CHARGE" flag is set to "TRUE" when I_BT becomes greater than the recharge end current of the battery 4a (I_BATT_IN_CHARGE).

The "BATT_IN_BUFFER" flag is set to "TRUE" when I_BT becomes greater than or equal to the discharge end current of the battery 4a (I_BATT_IN_DISCHARGE), smaller than or equal to the recharge end current of the battery 4a and V_BT is greater than or equal to a preset voltage value that is slightly lower than BATT_FLOAT, for example lower than 10 V DC, as indicated in Figure 9: when these conditions occur on BATT_IN_CHARGE or on BATT_IN_BUFFER, one migrates to the Charge state 702.

Optionally, before setting the value of the flags to "TRUE", it is possible to set a timeout period during which the detected condition persists.

In the "Charge" state 702, the battery 4a is subjected to the charging process, controlling the voltage across it. Since the battery must not be discharged, the first switch 31a is opened and, in order to provide its off state (i.e., the actual elimination of the current that flows through it), the voltage setpoint of the AC/DC rectification system 101 is set to the value "BATT_FLOAT". The battery 4a has a voltage that is in any case comprised between its discharge end voltage "BATT_END_DISCHARGE" and the floating voltage "BATT_FLOAT", and therefore the first switch 31a is reverse biased and actually opens. The diode 32a starts to conduct and therefore the battery 4a can absorb current from the DC bus 103 to perform the recharging step.

The UPS 100 remains in the "Charge" state 702 for a certain time until the battery 4a ends the charging step; at this point one migrates again to the "Standby" state 701, in which the battery, which is now charged, is disconnected electrically (for charging and discharge) from the DC bus 103.

From the "Standby" state 701, one passes to the "Test-Eco" state 705 if a mode referenced here as "ECO_MODE" is activated: this state is used to test the capacity of the battery string 4a and 4b to deliver charge before migrating to a "saving" mode state. In this state, the AC/DC rectification system 101 is started and the first switch 31a is closed: therefore, the battery 4a is connected electrically for charging and discharging to the DC bus 103.

The DC/AC inverter system 105 is started but does not supply the load 1007, because the solid-state switch 1008 is open. The load 1007 is carried directly by the emergency electrical mains 1010 because the bypass switch 1009 is closed.

In this step 705, the setpoint of the voltage of the AC/DC rectification system 101 is still the low one ("RECT_LOW_VOLT"): closure of the first switch 31a connects the battery 4a to the DC bus 103 and, if the battery 4a still has runtime, it forces the voltage of the DC bus to a value that tends to the nominal voltage at zero power with a charged battery ("BATT_NOM_ZERO") by means of the first switch 31a. If instead the battery 4a has no runtime, its voltage is close to the discharge end voltage ("BATT_END_DISCHARGE") and is recharged by means of the second switch 32a by the AC/DC rectification system 101. One migrates to the saving state 706 ("Eco-mode") only if one observes that the voltage of the DC bus 103 is higher by a certain value than the current setpoint value of the AC/DC "RECT_LOW_VOLT", so as to indicate a battery with charging capacity or a recharged battery.

In the "Eco-mode" state 706, the electrical efficiency of the UPS 100 is optimized in the Off-Line mode and maximum reactivity to restoration of the On-Line Double Conversion mode is ensured in case of failure or if the range of allowable voltages of the bypass mains 1010 is abandoned.

Both the AC/DC rectification system 101 and the DC/AC inverter system 105 are stopped, while the first switch 31a is kept closed and the battery 4a is kept connected to the DC bus 103 (a battery that substantially is neither charged nor discharged) and the load 1007 is supplied by the emergency mains 1010 by means of the bypass switch 1009.

When an exit from tolerance of the emergency mains 1010 that is supplying the load 1007 is detected, by means of an amplitude and frequency monitoring of the electrical mains, one passes immediately to the "Wait" state 703, restarting the AC/DC system 101 and the DC/AC system 105 and switching from the line with simultaneous opening of the bypass switch 1009 and closure of the solid-state switch 1008.

As mentioned, the introduction of the one-way switches 31a, 31b, 32a and 32b can be used to have a considerable increase in the electrical efficiency of the machine.

To understand fully the innovation that is presented, one should consider how the elements 101, 1107, 105, 1008 and 1009 are usually provided in the current background art.

The switches 1008 and 1009 are provided by means of electronic technology in order to minimize the insertion/disconnection time by using SCR diodes. These components have mainly conduction losses that depend on the direct current and negligible switching components at the frequency of the mains 1002.

The AC/DC system 101 and the DC/AC system 105 are provided by means of IGBT or MOSFET technology according to disparate topologies and are driven according to pulse width modulation (PWM) techniques. These subsystems are affected by several kinds of loss due to the technological and constructive characteristics of the components. One distinguishes in particular:
- IGBT conduction losses, which depend on the direct current that flows in the component;
- diode conduction losses, which depend on the direct current that flows through the diodes that allow recirculation of the power toward the DC part of the UPS;
- IGBT switching losses, which depend on the switching frequency of the PWM proportionally, on the DC voltage across the component at on-off and off-on switching, and on the constructive characteristics of the IGBT component;
- diode recovery losses, which depend on the switching frequency of the PWM proportionally, on the DC voltage across the component at on-off and off-on switching, and on the constructive characteristics of the IGBT components and diodes according to the phenomenon of "Recovery Charge", which is known in the literature;
- inductor losses: in order to limit the current in input from the mains 1002 or in output toward the load 1007, power inductors are added between the electrical mains/load and the semiconductor part, and said inductors are affected by losses in the copper winding, hysteresis losses and eddy currents in the ferromagnetic core. For equal constructive characteristics, the losses in the copper depend on the current and the losses in the iron depend on the quantity of current ripple that is present in the inductor.

The input/output current cannot be changed, since it is set by the power rating of the machine and by the nominal values of the electrical mains 1002 and the nominal values to be generated on the load 1107. Therefore, for equal components and characteristics thereof, all the conduction losses described cannot be optimized appreciably.

Switching losses instead can be reduced significantly, for equal components and characteristics thereof, by lowering the voltage at which the IGBT/MOSFET switches switch: this voltage is none other than the bulk voltage (i.e., the DC voltage in output from the AC/DC rectification system) or, in the case of the invention, the half-bulk voltage, which is a parameter that can be varied dynamically thanks to the use of the AC/DC rectification system 101 and can be controlled according to a logic that can be as complex as one wishes.

The increase in machine efficiency can be achieved by raising the bulk voltage in output from the AC/DC rectification system 101 or from the battery charger 1107 to a relatively low value, in particular to the value "RECT_LOW_VOLT", which can be comprised by way of indication between 90% and 95% of nominal voltage ("BATT_NOM_ZERO") of the series arrangement of the batteries 4a+4b in a fully charged state and at zero power.

This value must be lower than the "BATT_NOM_ZERO" voltage of the battery 4a, so as to inhibit its recharging, and requires the battery 4a to be disconnected in discharge from the DC bus 103 by the switch-off of the first switch 31a. In this manner there is no conflict between the need to extend the operating life of the battery 4a, keeping it disconnected electrically from the DC bus 103 of the UPS 100, to ensure full runtime and to increase the electrical transfer efficiency of the machine.

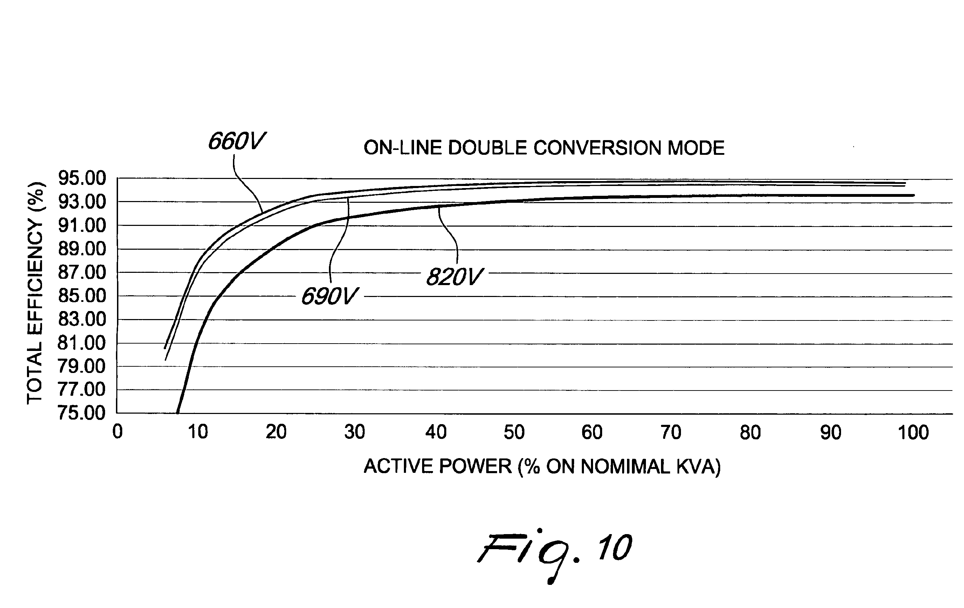

Figure 10 shows a comparison between the electrical conversion efficiency in the On-Line Double Conversion mode as the percentage load varies (from 0% to 100%) as a function of the total bulk voltage that the AC/DC rectification system 101 forces on the DC side of the UPS 100. The comparison is provided for three bulk voltages that are close to the ones of interest defined in Figure 7. As can be noted, efficiency is high even with very low percentage loads.

In the current background art, the battery is kept constantly connected electrically to the DC bus and the AC/DC rectification system needs to force a voltage that is at least equal to "BATT_FLOAT" to prevent the battery from intervening in discharge on the flow of power when there is no need, thus keeping it in floating conditions.

The method presented here, thanks to the smart use of the first one-way switch 31a in combination with the AC/DC rectification system 101, allows a total electric efficiency gain (for equal components and topology of the AC/DC rectification system 101 and, therefore, for an equal cost) of approximately 1% at the point of maximum efficiency at 75% of the nominal power.

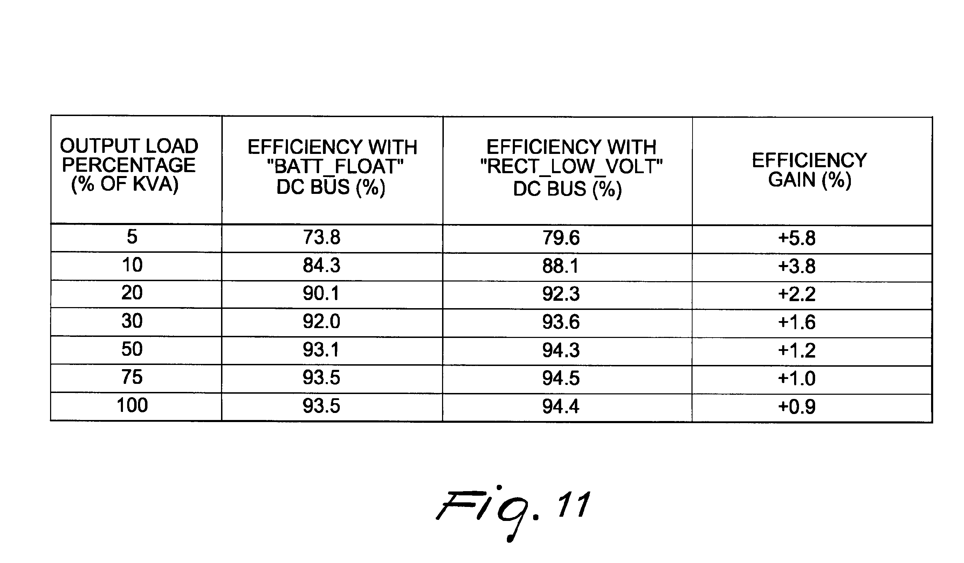

Figure 11 shows the comparisons between a conventional background art solution with the DC bus 1003 kept at "BATT_FLOAT" and the solution according to the invention, in which the DC bus is adjusted to a "RECT_LOW_VOLT" voltage.

The table of Figure 11 and the advantages of the invention are evident from the remarks that follow.

First of all, there is a significant operating cost reduction. For an equal load profile on the load 1007 of the user, an increase in conversion efficiency entails a better power utilization (and therefore energy consumption) on the side of the input electrical mains 1002. This leads to a lower operating cost of the UPS 100. By way of example, a 100 kVA machine that integrates the functions cited above and is used with a power factor of 1 and kept constantly at 75% of nominal load in output (statistically the representative load) allows a saving of approximately 7400 kWh/year of power consumed by the mains 1002 with respect to the same solution of the background art.

A further saving resides in the lower power (usually of the electric type) that is required for conditioning the installation environment of the UPS and of its battery string, since the higher electrical efficiency of the UPS leads in fact to a lower emission of heat by said UPS.

Another advantage of the invention is the higher reliability of the UPS. The semiconductors normally used to manufacture the components 101, 105, 1008 and 1009 have an MTBF ("Medium Time Between Failure") that decreases as the voltage across them, at which switching of the pulse width modulation (PWM) technique occurs, increases. Keeping the bulk voltage low as in the present invention, i.e., at "RECT_LOW_VOLT", avoids the amplification of degenerative phenomena that are known in the literature, such as the effect of cosmic rays or degradation due to parasitic capacitors of the components themselves, increasing the MTBF of the UPS for equal components and machine structure.

Furthermore, in contrast with the trend toward increasing the topological complexity of AC/DC rectification systems and of battery chargers in order to increase electrical efficiency, the present invention uses a simple solution that allows higher efficiency for equal components 101, 105, 1008 and 1009, leaving the MTBF substantially unchanged.

In system installations where redundancy on the load 1007 is required, usually two or more UPS units are placed, their outputs being connected in parallel. In an example of redundant parallel with two UPS units 100 with a nominal power of 100 kVA in which the load conditions are 100% of the nominal load of the installation, the two UPS units each provide 50 kVA of power to the load. An increase in efficiency at low power values (in the example of 50 kVA) due to the solutions of the present description, if compared with the efficiency that a non-redundant system that had to supply the entire power to the load (i.e., 100 kVA) would have, entails a saving in electric power consumed from the primary electrical mains 1002 of approximately 7900 kWh/year, with the additional advantage of redundancy on the load itself.

A further element that can be used to improve the electrical efficiency (and therefore the operating cost) of the UPS 100 is the reduction of the switching frequency of the semiconductors of the AC/DC rectification system 101 and DC/AC inverter system 105 in modulation with the PWM method.

In particular, in the control system the frequency with which the actuation variables of the power devices 101, 105 and optionally 1107 are updated is an integer multiple or an integer submultiple of the PWM frequency. Typically, the digital control algorithms are executed in their entirety once for each PWM cycle (real-time control); the actuation variables of these controls are generally the control duty cycles of the IGBT/MOSFET/SCRs.

It is known that most closed-cycle linear control methods performed with a control frequency (FC) lead to pass-bands that at most can reach the value of FC/10 without sacrificing excessively the phase margin, which should not drop below 30°-40°. In order to obtain acceptable dynamic performance, particularly in responses to load transients, the closed-cycle pass-band must have a sufficiently high value: this requirement is in contrast with the demand to lower the PWM frequency in order to improve electrical efficiency. In the UPS 100 it is therefore possible to use several per se known methods in order to make the two requirements coexist.

For example, it is possible to use a frequency FC that is an integer multiple of the PWM frequency, preferably equal to twice the PWM frequency.

As an alternative, it is possible to use advanced control techniques, in which the control systems are synthesized with the aid of predictive schemes, such as finite delay compensators, Smith predictors, etc. Alternatively, it is possible to resort to nonlinear techniques that allow to exceed the above cited FC/10 limit and approach Shannon's theoretical limit of FC/2.

Optionally, it is possible to resort to mixed control schemes, in which part of the adjustment is performed in the digital domain and part is performed in the analog domain. In this manner it is possible to overcome the limitation set by digital systems, albeit with some disadvantages as regards immunity to noise.

The preferred solution that can be used in the UPS 100 is to set FC=2*FPWM, i.e., two updates of the control values at each PWM cycle, using the following techniques of the predictive type that aid the expansion of the pass-band for an equal PWM frequency without sacrificing the phase margin:
- AC/DC current sampling delay compensation technique: the sampling delay and the execution of digital control can be quantified as 1/ (2*FC), which makes the system a system with a pure finite delay. This delay can be approximated according to Padé with a polynomial representation that stops at the first order;
- feed-forward techniques for pre-determining the duty cycle: both in the adjustment of the AC/DC rectification system 101 and of the DC/AC inverter system 105, techniques are applied which pre-calculate the duty cycle to be applied to the respective bridges on the basis of the filtered readings of the input voltages from the mains 1002, half-bulk voltages on the capacitors 6a and 6b and instantaneous voltage produced by the UPS 100 on the load 1007.

The output load 1007 can have highly variable characteristics. It is possible in particular to have linear or nonlinear loads.

In linear loads, the impedance, i.e., the ratio between the voltage across the load and the current on the load, is constant over time or, in an equivalent manner, over the phase angle. Linear loads are then classified according to the power factor (i.e., the cosine of the angle between the first harmonic of the voltage across the terminals and the first harmonic of the current). With a unit power factor, one has resistive loads in which all the apparent power delivered by the UPS 100 is active power used by the load 1007. With a positive non-unit power factor, there are loads in which part of the apparent power delivered by the UPS 100 is active power and part is stored reactive power of the reactive elements of the load 1007 of the inductive type. With a negative non-unit power factor, one has loads in which part of the apparent power delivered by the UPS 100 is active power and part is stored reactive power of the reactive elements of the load 1007 of the capacitive type.

In nonlinear loads, the impedance is not constant over time or, in an equivalent manner, depends on the phase angle. These types of load are characterized by a current absorption that is not sinusoidal, when they are powered by a voltage sinusoid in output from the DC/AC inverter system 105 and are therefore termed "distorting loads".

In order to improve the harmonic distortion of the current absorbed by nonlinear loads, the UPS 100 can optionally use a scheme for compensating harmonics which is integrated in the DC/AC inverter system 105 without the additional use of external components.

The correction scheme, per se of a known type, calculates the active power P and the reactive power Q in the fundamental component and in the component due to harmonics other than the fundamental one, by means of a vector projection technique based on Clarke's transform. The harmonic current components that are found are then reinjected in the reference of the current loop with the opposite sign. Their influence on the duty cycle for controlling the DC/AC inverter system 105 allows their reduction/elimination in output.

In practice it has been found that the device and the method according to the invention, as well as the corresponding UPS, achieve fully the intended aim and objects.

The invention thus conceived is susceptible of numerous modifications and variations, all of which are within the scope of the appended claims. The device for reducing harmonic voltage components and its control method according to the present invention can be used also in the case of systems in which only capacitors are present instead of battery strings. With the same principle, the invention is capable of reducing the voltage ripple (and therefore the current ripple) on said capacitors, causing a lower electrochemical stress of the electrolyte or in general of the chemical element by means of which it is manufactured. Possible fields of application are inverters for electric motors, photovoltaic inverters, DC voltage stabilizing units (DC/DC rectification systems of disparate size and technology), voltage isolation units.

All the details of the invention may further be replaced with other technically equivalent elements.

The disclosures in Italian Patent Application No. AR2012000030 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for reducing the harmonic voltage components for a DC bus (103) subjected to voltage ripples, wherein the device comprises at least one pair of elements with the same name plate data, said elements being batteries (4a, 4b; 104a, 104b) or capacitors (6a, 6b; 106a, 106b) and being connected in a bridge configuration on the DC bus and in series to each other so as to define a common node (F) at one of their ends, **characterized in that** said common node (F) is connected, by means of a switch (2), to a reference point (P) which is equipotential with respect to a voltage reference (N), said switch (2) being configured to isolate said reference point (P) with respect to said elements (4a, 4b; 104a, 104b; 6a, 6b; 106a, 106b) in order to vary the voltage ripple on said elements (4a, 4b; 104a, 104b; 6a, 6b; 106a, 106b) depending on the situation of use.

2. The device according to claim 1, wherein said situation of use comprises the charging or discharging of the batteries or capacitors (4a, 4b; 104a, 104b; 6a, 6b; 106a, 106b) and/or comprises the extent of the power of a load (1007) connected to said DC bus (103).

3. The device according to the preceding claim, wherein said load (1007) is connected to said DC bus (103) by means of a DC/AC inverter system (105).

4. The device according to one or more of the preceding claims, wherein said reference point (P) is equipotential with respect to the ground reference or to a neutral wire (N) of an input mains (1002) of a AC/DC rectification system (101).

5. The device according to one or more of the preceding claims, **characterized in that** said DC bus (103) is connected to a balancing system which is configured to perform a selective injection of direct current in the DC bus (103) in order to compensate for an asymmetrical absorption of the load (1007).

6. An uninterruptible power supply or UPS (100), comprising in input an AC/DC rectification system (101) and **characterized in that** it comprises the device according to one or more of the preceding claims, said AC/DC rectification system (101) being connected to a DC/AC inverter system (105) by means of said DC bus (103), said AC/DC rectification system (101) having in input a mains AC voltage (1002) and said DC/AC inverter system (105) having in output a fourth switch (1008) in order to disconnect temporarily said output from a load (1007), the batteries (4a, 4b; 104a, 104b) of said device (2) constituting the battery of said UPS (100), each one of said batteries being connected in parallel to a respective one of said capacitors (6a, 6b; 106a, 106b).

7. The uninterruptible power supply according to claim 6, wherein said balancing system (600) is connected to the DC bus (103) and to the common node (F) so as to draw a voltage value on a battery (4a or 104a) of said pair of batteries or on the corresponding capacitor (6a) and a voltage value on the other battery (4b or 104b) of said pair of batteries or on the corresponding capacitor (6b), said balancing system (600) further comprising a balancing regulator (604) which is adapted to produce in output, on the basis of the difference of said voltage values, which are optionally low-pass filtered, the consequent DC value to be injected in the DC bus (103) in order to cancel out said difference.

8. The uninterruptible power supply according to claim 7, comprising a low-pass filter which is adapted to eliminate ripple components, preferably having a cutoff frequency comprised between 10% and 15% of the frequency of the input mains (1002).

9. The uninterruptible power supply according to claim 7 or 8, wherein said DC value is added to an AC setpoint in order to obtain a reference current, the AC setpoint being generated by a voltage loop (605), on the basis of the comparison of the voltage measured on the DC bus (103) with a current voltage setpoint set on the AC/DC rectification system (101), the reference current value defining the duty cycle of a PWM modulator (609) which is adapted to drive the AC/DC rectification system (101).

10. A DC/AC inverter system (105), comprising a DC bus (103) subjected to voltage ripples, **characterized in that** said DC bus comprises the device (2) for reducing harmonic voltage components according to one or more of claims 1-5.

11. An AC/DC or DC/DC rectification system, comprising a DC bus (103) subjected to voltage ripples, **characterized in that** said DC bus comprises the device (2) for reducing harmonic voltage components according to one or more of claims 1-5.

12. A method for reducing harmonic voltage components for a DC bus (103), wherein the DC bus (103) comprises at least one pair of elements having the same name plate data, said elements being batteries (4a, 4b; 104a, 104b) or capacitors (6a, 6b; 106a, 106b) and being connected in a bridge configuration on the DC bus and mutually in series so as to define a common node (F) at one of their ends, **characterized in that** it comprises the steps of:
- connecting a switch (2) between said common node (F) and a reference point (P) that is equipotential with respect to a voltage reference (N),
- opening or closing said switch in order to isolate or connect said reference point (P) with respect to the elements (4a, 4b; 104a, 104b; 6a, 6b; 106a, 106b) in order to vary the voltage ripple on said elements (4a, 4b; 104a, 104b) depending on the situation of use.

13. The method according to the preceding claim, wherein said DC bus (103) is the DC bus of the UPS according to one or more of claims 6-9, **characterized in that** it comprises the steps of:
- if the power required by the load (1007) and delivered by the DC/AC inverter system (105) is lower than a certain threshold, the switch (2) is kept closed;
- if instead the power required by the load (1007) and delivered by the DC/AC inverter system (105) is higher than said threshold, the switch (2) is kept open.

14. The method according to claim 12, wherein said DC bus (103) is the DC bus of the UPS according to one or more of claims 6-9, with the load (1007) maintained by an emergency mains (1010) and the DC/AC conversion system (105) kept off or on with zero load, **characterized in that** it comprises the steps of:
- if the batteries (4a, 4b; 104a, 104b) are recharging, the switch (2) is kept open;
- if instead the batteries (4a, 4b; 104a, 104b) are in the floating step, the switch (2) is kept closed.

## Patentansprüche

1. Eine Vorrichtung zur Reduzierung der Oberschwingungsspannungskomponenten für einen Gleichstrombus (103), die Spannungswelligkeiten ausgesetzt sind, wobei die Vorrichtung mindestens ein Paar von Elementen mit denselben Kennzeichnungsschilddaten umfasst, wobei die Elemente Batterien (4a, 4b; 104a, 104b) oder Kondensatoren (6a, 6b; 106a, 106b) sind und in einer Brückenkonfiguration am Gleichstrombus und seriell miteinander angeschlossen sind, um an einem ihrer Enden einen gemeinsamen Knoten (F) zu bestimmen, **dadurch gekennzeichnet, dass** der gemeinsame Knoten (F) über einen Schalter (2) mit einem Bezugspunkt (P) verbunden ist, der potentialmäßig gleich mit Bezug auf eine Referenzspannung (N) ist, wobei der Schalter (2) konfiguriert ist, um den Bezugspunkt (P) gegenüber den Elementen (4a, 4b; 104a, 104b; 6a, 6b; 106a, 106b) zu isolieren, um die Spannungswelligkeit an den Elementen (4a, 4b; 104a, 104b; 6a, 6b; 106a, 106b) je nach Nutzungssituation zu variieren.

2. Die Vorrichtung gemäß Anspruch 1, wobei die Nutzungssituation das Laden oder Entladen der Batterien oder Kondensatoren (4a, 4b; 104a, 104b; 6a, 6b; 106a, 106b) und/oder den Umfang der Leistung einer Last (1007), die mit dem Gleichstrombus (103) verbunden ist, umfasst.

3. Die Vorrichtung gemäß dem vorstehenden Anspruch, wobei die Last (1007) mit dem Gleichstrombus (103) über einen DC/AC-Wechselrichter (105) verbunden ist.

4. Die Vorrichtung gemäß einem oder mehreren der obigen Ansprüche, wobei der Bezugspunkt (P) eine Potentialgleichheit mit Bezug auf die Erdungsreferenz oder auf einen Mitteldraht (N) eines Eingangs-Hauptnetzes (1002) eines AC/DC-Gleichrichtersystems (101) ist.

5. Die Vorrichtung gemäß einem oder mehreren der obigen Ansprüche, **dadurch gekennzeichnet, dass** der Gleichstrombus (103) mit einem Abgleichsystem verbunden ist, das konfiguriert ist, um ein selektives Zuführen von Gleichstrom in den Gleichstrombus (103) durchzuführen, um eine asymmetrische Absorption durch die Last (1007) zu kompensieren.

6. Eine unterbrechungsfreie Stromversorgung oder USV (100), die als Eingang ein AC/DC-Gleichrichtersystem (101) umfasst, und **dadurch gekennzeichnet ist, dass** sie die Vorrichtung gemäß einem oder mehreren der obigen Ansprüche umfasst, wobei das AC/DC-Gleichrichtersystem (101) über den Gleichstrombus (103) mit einem DC/AC-Wechselrichtersystem (105) verbunden ist, wobei das AC/DC-Gleichrichtersystem (101) als Eingang eine AC-Netzspannung (1002) hat und das DC/AC-Wechselrichtersystem (105) am Ausgang einen vierten Schalter (1008) hat, um den Ausgang vorübergehend von einer Last (1007) zu trennen, wobei die Batterien (4a, 4b; 104a, 104b) der Vorrichtung (2) die Batterie der USV (100) bilden und jede der Batterien parallel mit einem entsprechenden der Kondensatoren (6a, 6b; 106a, 106b) verbunden ist.

7. Die unterbrechungsfreie Stromversorgung gemäß Anspruch 6, worin das Abgleichsystem (600) mit dem Gleichstrombus (103) und mit dem gemeinsamen Knoten (F) verbunden ist, um einen Spannungswert auf eine Batterie (4a oder 104a) des Paares von Batterien oder auf den entsprechenden Kondensator (6a) und einen Spannungswert der anderen Batterie (4b oder 104b) des Paares von Batterien oder auf den entsprechenden Kondensator (6b) zu ziehen, wobei das Abgleichsystem (600) desweiteren einen Abgleichsregler (604) umfasst, der ausgebildet ist, um als Ausgabe, anhand der Differenz der Spannungswerte, die optional tiefpassgefiltert sind, den sich daraus ergebenden Gleichstromwert zu erzeugen, der in den Gleichstrombus (103) einzuspeisen ist, um die Differenz zu beseitigen.

8. Die unterbrechungsfreie Stromversorgung gemäß Anspruch 7, die einen Tiefpassfilter umfasst, der ausgebildet ist, um Welligkeitskomponenten zu beseitigen, und vorzugsweise eine Grenzfrequenz zwischen 10% und 15% der Frequenz des Eingangsnetzes (1002) hat.

9. Die unterbrechungsfreie Stromversorgung gemäß Anspruch 7 oder 8, worin der Gleichstromwert zu einem AC-Sollwert addiert wird, um einen Bezugsstrom zu erhalten, wobei AC-Sollwert von einer Spannungsschleife (605) erzeugt wird, auf der Grundlage des Vergleichs der am Gleichstrombus (103) gemessenen Spannung mit einem Stromspannungs-Sollwert, der am AC/DC-Gleichrichtersystem (101) eingestellt ist, wobei der Bezugsstromwert den Tastgrad eines Pulsdauermodulators (609) bestimmt, der ausgebildet ist, um das AC/DC-Gleichrichtersystem (101) zu treiben.

10. Ein AC/DC-Wechselrichtersystem (105), das einen Gleichstrombus (103) umfasst, der Spannungswelligkeiten ausgesetzt ist, **dadurch gekennzeichnet, dass** der Gleichstrombus die Vorrichtung (2) zur Reduzierung von Oberschwingungsspannungskomponenten gemäß einem oder mehreren der Ansprüche 1-5 umfasst.

11. Ein AC/DC- oder DC/DC-Gleichrichtersystem, das einen Gleichstrombus (103) umfasst, der Spannungswelligkeiten ausgesetzt ist, **dadurch gekennzeichnet, dass** der Gleichstrombus die Vorrichtung (2) zur Reduzierung von Oberschwingungsspannungskomponenten gemäß einem oder mehreren der Ansprüche 1-5 umfasst.

12. Ein Verfahren zur Reduzierung von Oberschwingungsspannungskomponenten für einen Gleichstrombus (103), wobei der Gleichstrombus (103) mindestens ein Paar von Elementen mit denselben Kennzeichnungsschilddaten umfasst, wobei die Elemente Batterien (4a, 4b; 104a, 104b) oder Kondensatoren (6a, 6b; 106a, 106b) sind und in einer Brückenkonfiguration am Gleichstrombus und seriell aneinander angeschlossen sind, um an einem ihrer Enden einen gemeinsamen Knoten (F) zu bestimmen, **dadurch gekennzeichnet, dass** es folgende Schritte umfasst:
- Anschluss eines Schalters (2) zwischen dem gemeinsamen Knoten (F) und einem Bezugspunkt (P), der eine Potentialgleichheit mit Bezug auf eine Spannungsreferenz (N) aufweist,
- Öffnen oder Schließen des Schalters, um den Bezugspunkt (P) mit Bezug auf die Elemente (4a, 4b; 104a, 104b; 6a, 6b; 106a, 106b) zu trennen oder zu verbinden, um die Spannungswelligkeit an den Elementen (4a, 4b; 104a, 104b) je nach Nutzungssituation zu variieren.

13. Das Verfahren gemäß dem obigen Anspruch, worin der Gleichstrombus (103) der Gleichstrombus der USV ist gemäß einem oder mehreren der Ansprüche 6-9, **dadurch gekennzeichnet, dass** es folgende Schritte umfasst:
- wenn die Leistung, die von der Last (1007) gefordert und vom DC/AC-Wechselrichtersystem (105) geliefert wird, unterhalb eines bestimmten Schwellenwertes liegt, wird der Schalter (2) geschlossen gehalten,
- wenn hingegen die Leistung, die von der Last (1007) gefordert und vom DC/AC-Wechselrichtersystem (105) geliefert wird, über dem Schwellenwert liegt, wird der Schalter (2) offen gehalten.

14. Das Verfahren gemäß Anspruch 12, worin der Gleichstrombus (103) der Gleichstrombus der USV ist, gemäß einem oder mehreren der Ansprüche 6-9, wobei die Last (1007), die von einem Notstromnetz (1010) und dem DC/AC-Umwandlungssystem (105) aufrechterhalten wird, mit Nulllast ab- oder angeschaltet ist, **dadurch gekennzeichnet, dass** es folgende Schritte umfasst:
- wenn die Batterien (4a, 4b; 104, 104b) wieder aufgeladen werden, wird der Schalter (2) offen gehalten,
- wenn die Batterien (4a, 4b; 104a, 104b) sich hingegen im erdfreien Schritt befinden, wird der Schalter (2) geschlossen gehalten.

## Revendications

1. Dispositif permettant de réduire les composantes de tension harmoniques d'un bus CC (103) soumis à des ondulations de tension, dans lequel le dispositif comprend au moins une paire d'éléments avec les mêmes données de plaque signalétique, lesdits éléments étant des batteries (4a, 4b ; 104a, 104b) ou des condensateurs (6a, 6b ; 106a, 106b), et étant connectés en configuration en pont sur le bus CC et en série les uns par rapport aux autres, de manière à définir un noeud commun (F) à l'une de leurs extrémités, **caractérisé en ce que** ledit noeud commun (F) est raccordé, au moyen d'un interrupteur (2), à un point de référence (P), qui est équipotentiel par rapport à une référence de tension (N), ledit interrupteur (2) étant configuré pour isoler ledit point de référence (P) par rapport auxdits éléments (4a, 4b ; 104a, 104b ; 6a, 6b ; 106a, 106b) pour faire varier l'ondulation de tension sur lesdits éléments (4a, 4b ; 104a, 104b ; 6a, 6b ; 106a, 106b) en fonction du scenario d'utilisation.

2. Dispositif selon la revendication 1, dans lequel ledit scénario d'utilisation comprend la charge ou la décharge des batteries ou des condensateurs (4a, 4b ; 104a, 104b ; 6a, 6b ; 106a, 106b) et/ou l'extension de la puissance d'une charge (1007) raccordée audit bus CC (103).

3. Dispositif selon la revendication précédente, dans lequel ladite charge (1007) est reliée audit bus CC (103) au moyen d'un onduleur (105).

4. Dispositif selon une ou plusieurs des revendications précédentes, dans lequel ledit point de référence (P) est équipotentiel par rapport à la terre de référence ou un fil neutre (N) d'une entrée de secteur (1002) d'un système de redressement CA/CC (101).

5. Dispositif selon une ou plusieurs des revendications précédentes, **caractérisé en ce que** ledit bus CC (103) est relié à un système d'équilibrage qui est configuré pour réaliser une injection sélective de courant continu dans le bus CC (103) afin de compenser une absorption asymétrique de la charge (1007).

6. Alimentation sans coupure ou UPS (100) comprenant un système de redressement CA/CC (101), en entrée, et **caractérisé en ce qu'**il comprend le dispositif selon une ou plusieurs des revendications précédentes, ledit système de redressement CA/CC (101) étant relié à un onduleur CC/CA(105) au moyen dudit bus CC (103), ledit système de redressement CA/CC (101) ayant en entrée une tension CA secteur (1002) et ledit onduleur (105) ayant un quatrième interrupteur (1008) en sortie, afin de déconnecter temporairement ladite sortie d'une charge (1007), les batteries (4a, 4b ; 104a, 104b) dudit dispositif (2) constituant la batterie dudit système UPS (100), chacune desdites batteries étant montées en parallèle sur l'un desdits condensateurs (6a, 6b ; 106a, 106b).

7. Alimentation sans coupure selon la revendication 6, dans lequel ledit système d'équilibrage (600) est relié au bus CC (103) et au noeud commun (F), de manière à absorber une valeur de tension sur une batterie (4a ou 104a) de ladite paire de batteries ou sur le condensateur correspondant (6a), et une valeur de tension sur l'autre batterie (4b ou 104b) de ladite paire de batteries ou sur le condensateur correspondant (6b), ledit système d'équilibrage (600) comprenant, en outre, un régulateur d'équilibrage (604) conçu pour produire, en sortie, sur la base de la différence desdites valeurs de tension, qui sont optionnellement filtrées avec un filtre passe-bas, la valeur CC consécutive à injecter dans le bus CC (103) afin d'annuler ladite différence.

8. Alimentation sans coupure selon la revendication 7, comprenant un filtre passe-bas qui est conçu pour éliminer les composantes d'ondulation, ayant de préférence une fréquence de coupure comprise entre 10% et 15% de la fréquence de l'entrée de secteur (1002).

9. Alimentation sans coupure selon la revendication 7 ou 8, dans lequel ladite valeur CC est ajoutée à un point de consigne CA de manière à obtenir un courant de référence, le point de consigne CA étant généré par une boucle de tension (605), sur la base de la comparaison de la tension mesurée sur le bus CC (103) à un point de consigne de tension de courant fixé sur le système de redressement CA/CC (101), la valeur du courant de référence définissant le rapport cyclique d'un modulateur PWM (609) qui est conçu pour piloter le système de redressement CA/CC (101).

10. Onduleur CC/CA(105) comprenant un bus CC (103) soumis à des ondulations de tension, **caractérisé en ce que** ledit bus CC comprend le dispositif (2) pour réduire les composantes de tension harmoniques selon une ou plusieurs des revendications 1-5.

11. Système de redressement CA/CC ou CC/CC, comprenant un bus CC (103) soumis à des ondulations de tension, **caractérisé en ce que** ledit bus CC comprend le dispositif (2) pour réduire les composantes de tension harmoniques selon une ou plusieurs des revendications 1-5.

12. Procédé de réduction des composantes de tension harmoniques pour un bus CC (103), dans lequel le bus CC (103) comprend au moins une paire d'éléments ayant les mêmes données de plaque signalétique, lesdits éléments étant des batteries (4a, 4b ; 104a, 104b) ou des condensateurs (6a, 6b ; 106a, 106b), et étant connectées en configuration en pont sur le bus CC et mutuellement en série, de manière à définir un noeud commun (F) à l'une de leurs extrémités, **caractérisé en ce qu'**il comprend les étapes de :
- connexion d'un interrupteur (2) entre ledit noeud commun (F) et un point de référence (P) qui est équipotentiel par rapport à une référence de tension (N),
- ouverture ou fermeture dudit interrupteur afin d'isoler ou relier ledit point de référence (P) par rapport aux éléments (4a, 4b ; 104a, 104b ; 6a, 6b ; 106a, 106b) pour faire varier l'ondulation de tension sur lesdits éléments (4a, 4b ; 104a, 104b) en fonction du scénario d'utilisation.

13. Procédé selon la revendication précédente, dans lequel ledit bus CC (103) est le bus CC de l'UPS selon une ou plusieurs des revendications 6-9, **caractérisé en ce qu'**il comprend les étapes de :
- si la puissance requise par la charge (1007) et fournie par l'onduleur CC/CA(105) est inférieure à un certain seuil, l'interrupteur (2) est maintenu fermé ;
- si, au contraire, la puissance requise par la charge (1007), et fournie par l'onduleur CC/CA(105), est supérieure audit seuil, l'interrupteur (2) est maintenu ouvert.

14. Procédé selon la revendication 12, dans lequel ledit bus CC (103) est le bus CC de l'UPS selon une ou plusieurs des revendications 6-9, avec la charge (1007) maintenue par une alimentation d'urgence (1010), et l'onduleur CC/CA(105) maintenu à l'arrêt ou en fonctionnement avec une charge nulle, **caractérisé en ce qu'**il comprend les étapes de :
- si les batteries (4a, 4b ; 104a, 104b) se rechargent, l'interrupteur (2) est maintenu ouvert ;
- si, au contraire, les batteries (4a, 4b ; 104a, 104b) sont en charge d'entretien, l'interrupteur (2) est maintenu fermé.
